# EUROPÄISCHE PATENTSCHRIFT

(11) **EP 2 637 819 B1**
(45) Veröffentlichungstag und Bekanntmachung des Hinweises auf die Patenterteilung: **23.08.2017**
(21) Anmeldenummer: 12783496.8
(22) Anmeldetag: 17.09.2012
(51) Int. Cl.: B23K 26/38, B23K 26/40, B23K 26/36, D04B 21/16, B60R 21/2165

(54) **VERFAHREN ZUR ERZEUGUNG VON MESSER - ODER LASERSCHWÄCHUNGEN VON LEDERHÄUTUNG**
METHOD FOR PRODUCING BLADE - OR LASER-INDUCED WEAK POINTS OF LEATHER SKIN
PROCÉDÉ DE PRODUCTION D'AFFAIBLISSEMENTS DANS DES PEAUX EN CUIR AU MOYEN D'UNE LAME OU D'UN LASER

(30) Priorität: 17.10.2011 DE 102011116010; 21.10.2011 DE 102011116542
(43) Veröffentlichungstag der Anmeldung: 18.09.2013
(73) Patentinhaber: Antolin Interiors Deutschland GmbH, 85391 Allershausen (DE)
(72) Erfinder: TOMAJ, Anton, 76734 Esslingen (DE)
(74) Vertreter: Capitán García, Maria Nuria
(86) Internationale Anmeldenummer: PCT/DE2012/200063
(87) Internationale Veröffentlichungsnummer: WO 2013/056707

(56) Entgegenhaltungen:
- DE-C1- 19 800 815
- JP-A- 2001 315 608
- JP-A- 2005 075 140

## Beschreibung

Die vorliegende Erfindung betrifft Verfahren zum Anlegen einer linienförmigen Schwächung in einem flächigen Dekormaterial gemäß dem Oberbegriff der Ansprüche 1 und 8 (siehe, z.B., JP2005075140 A1), und insbesondere Verfahren zum Anlegen einer linien- oder streifenförmigen Schwächung in einem Lederstück oder einer Kunststoffhaut.

Es sind verschiedene gebräuchliche Verfahren zum Herstellen einer linien- oder streifenförmigen Materialschwächung in Dekormaterialien vermittels Laserlichtstrahlen bekannt. Diesen Verfahren ist gemeinsam, dass ein Dekormaterial von der später verdeckten Rückseite her mit einem energiereichen Laserlichtstrahl bearbeitet wird, wobei zusätzliche Maßnahmen ergriffen werden, um ein Durchdringen der Bearbeitung an der Sichtseite des Dekormaterials zu verhindern. Ein derartiges gebräuchliches Verfahren offenbart beispielsweise die amtliche Publikation US 7,297,897 A und US 6,294,124 B1.

Weitere Verfahren zur Herstellung einer Schwächung mit möglichst geringer Abzeichnung an der Dekoroberfläche und insbesondere dazu anwendbare Bearbeitungstechniken offenbaren die Veröffentlichungen DE 199 44 371 A1, EP 1 745 989 A2 und DE 102 41 715 A1.

JP2005075140 A1 zeigt eine Schwächung eines Materials für die Herstellung eines Airbags entlang einer Schwächungslinie. Die Schwächung erfolgt im Material der Abdeckung mit einer Riffelung, die während des Spritzgusses durch das Einfahren von nadelförmigen Werkzeugteilen in das Material der Airbagabdeckung erfolgt. Es handelt sich nicht um eine Schwächung mit einem Laser oder einen Schneidwerkzeug nach der Herstellung einer Kunststoffhaut.

Aus der JP2001315608, ist es bekannt, die Löcher für die Schwächung einer Kunststoffhaut durch Veränderung des Laserwinkels, mit dem die Löcher hergestellt werden. Dieses Verfahren ist sehr aufwendig, da der Werkzeuglaser mit einstellbaren Lagerungen und nachfahrbarer Optik versehen sein muss.

Trotz sorgfältiger Anwendung kann sich mit den gebräuchlichen Verfahren die erzeugte Schwächung unter ungünstigen Umgebungsbedingungen an der Sichtseite abzeichnen, was als ästhetischer Nachteil des Produkts angesehen wird.

Vor diesem Hintergrund stellt sich die Erfindung die Aufgabe, ein Verfahren zum Laserschwächen von Dekormaterialien und insbesondere Leder und Kunststoffhäuten anzugeben, das eine verbesserte optische Erscheinung der Sichtseite liefert.

Zur Lösung dieser Aufgabe schlägt die Erfindung ein Verfahren mit den in den Ansprüchen 1 und 8 angegebenen Merkmalen vor.

Zweckmäßige Ausgestaltungen und Weiterbildungen der erfindungsgemäßen Verfahren sind in den abhängigen Unteransprüchen angegeben.

Eine gemeinsame bevorzugte Durchführungsform beider erfindungsgemäßer Verfahren wird nachfolgend mit Bezug auf die anhängenden schematisch vereinfachten Skizzen erläutert. Darin zeigen:
Fig. 1. eine vereinfachte schematische Darstellung einer Aufsicht auf ein Stück eines durch Anwendung einer ersten Durchführungsform eines erfindungsgemäßen Verfahrens geschwächten Dekormaterials;
Fig. 2. eine Seitenschnittansicht auf eine Anordnung zur Realisierung der ersten bevorzugten Durchführungsform eines erfindungsgemäßen Verfahrens;
Fig. 3. eine Seitenschnittansicht auf eine Anordnung zur Realisierung einer zweiten bevorzugten Durchführungsform eines erfindungsgemäßen Verfahrens; und
Fig. 4. eine schematische Detailschnittansicht auf ein

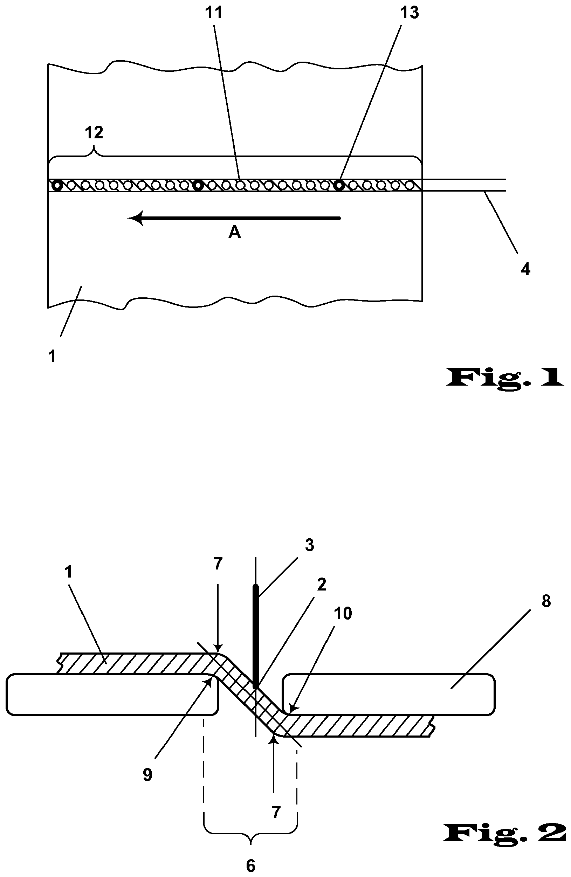

Gemäß der schematischen Darstellungen in den Fig. 1 und 2 ist eine linienförmige Schwächung, eine Schwächungslinie 4 oder ganz exakt ausgedrückt ein Schwächungsstreifen in einem Stück eines flächigen Dekormaterials 1 in der Art einer reihe von einzelnen Löchern 10 angelegt. Die Löcher 10 wurden durch einseitige momentane Einwirkung eines Laserlichtstrahls 3 auf die in der Zeichnung sichtbare Oberfläche des Dekormaterials 1 erzeugt. Ein solcherart bearbeitetes Dekormaterial 1 wird typisch zu einer sichtseitigen dekorativen Abdeckung über einer Öffnungsklappe eines Airbagfachs in einem Fahrzeuginnenverkleidungsteil weiterverarbeitet. In diesem Rahmen erfüllt die Schwächungslinie 4 die Funktion einer Sollbruchstelle und Aufreißlinie beim Auslöson und Ausstoßon des darunter verstauten Airbags. Insofern handelt es sich in einer besonders bevorzugten Anwendung bei dem Dekormaterial 1 um ein entsprechend zugerichtetes Lederstück oder um eine Kunststoffhaut. Alternativ kann es sich bei dem Dekormaterial auch um ein Stück eines Gewebes oder eines Ziervlies handeln.

Das in Fig. 1 gezeigte diskrete Lochbild mit einer Lochreihe 12 ungefähr gleich beabstandeter Löcher 11 entspricht der typischen diskontinuierlichen Bearbeitung. Dabei wird die Position des Einwirkungsbereichs 2 des Laserlichtstrahls 3 während der Einwirkung festgehalten. Während der Neupositionierung des Werkstücks, d.h. des Dekormaterials 1, wird die Einwirkung des Laserlichtstrahls 3 hingegen unterbrochen. Dadurch verbleibt der Bereich in der Verbindungslinie benachbarter Löcher 11 unbearbeitet. Der Einwirkungsbereich 2 des Laserlichtstrahls 3 springt in der diskontinuierlichen Bearbeitung quasi entlang der Bearbeitungsrichtung A von Loch 11 zu Loch 11 voran. Diese diskontinuierliche Bearbeitung lässt sich mit den derzeit gebräuchlichen Laserlichtquellen sehr einfach realisieren, weil diese bedingt durch ihre Bauart keinen kontinuierlichen Strahl aussenden, sondern eine steuerbare Abfolge von Laserlichtpulsen.

Gleichermaßen in Übereinstimmung mit den gebräuchlichen Verfahren liegt in der beschriebenen Situation die Seite der Einwirkungsstelle 2 des Laserlichtstrahls 3 der bestimmungsgemäßen Sichtseite des Dekormaterials 1 gegenüber. Das entspricht einer Bearbeitung von der Rückseite. Außerdem werden die Löcher 10 vorzugsweise als Sacklöcher ausgebildet, um eine Beeinträchtigung des Aussehens der Sichtseite des Dekormaterials zu vermeiden. Bei einer gepulsten Laserlichtquelle kann die Tiefe der Sacklöcher 10 einigermaßen wiederholgenau realisiert werden, indem eine vorgegebene Anzahl von Laserlichtpulsen mit vorgegebener Energie in einer Positionierung auf das Dekormaterial 1 einwirkt. Dennoch empfiehlt sich während des Fortschritts der Bearbeitung eine wiederkehrende Anpassung des Energieeintrags. Dies wird in durch die Herstellung intermittierender Referenzlöcher 13 erreicht. Dabei wird die tatsächliche Bearbeitungstiefe aus der durch die Restmateriaistärke am Grund des Lochs 11 austretende Lichtintensität des Laserlichtstrahls 3 ermittelt und die für die Bearbeitung vorgegebene Pulszahl und/oder die Pulsenergie neu zum Erreichen einer Zielbearbeitungstiefe festgelegt. Durch diese regelmäßige Neukalibrierung der Bearbeitung ist es möglich, Dichte-, Reflexions- und Dickenvariationen des Dekormaterials 1 entlang der Bearbeitungslinie zu kompensieren. Dies ist insbesondere bei der Bearbeitung von Leder ein erheblicher Vorteil.

Die Abweichung der erfindungsgemäßen Verfahren von den gebräuchlichen Schwächungsverfahren erschließt sich vor allem mit Blick auf die Fig. 2, die eine bevorzugte Anordnung zur Durchführung einer bevorzugten Durchführungsform veranschaulicht. Diese umfasst eine von oben einstrahlende nicht in Einzelheiten dargestellte Laserlichtquelle und eine Haltevorrichtung 8 für das Dekormaterial 1. Das ist zwischen zwei gegenüberliegenden Stützkanten 9, 10 der Haltevorrichtung 8 angeordnet. Aufgrund des Versatzes der Stützkanten 9, 10 in der Richtung des Laserlichtstrahls 3 bildet sich entlang der in die Zeichenebene hinein verlaufenden Bearbeitungsrichtung A ein Doppelfalz 6 aus. Dessen Lage ist so gewählt, dass sich der Einwirkungsbereich 2 des Laserlichtstrahls 3 zwischen und vorzugsweise mittig zwischen den Falzlinien 7 befindet. Durch die Ausrichtung der Stützkanten 9, 10 in Bezug auf die Einfallsrichtung des Laserlichtstrahls 3 ist die in der Schnittebene liegende und durch die schräge Linie angedeutet Mittelfaser des Dekormaterials 1 erkennbar in einer Neigung quer zur Bearbeitungsrichtung A angestellt. Die Einstrahlrichtung des Laserlichtstrahls 3 auf diese Mittelfaser ist also nicht wie in den gebräuchlichen Verfahren senkrecht, sondern weicht vom 90° Winkel deutlich ab. Die entlang der Strahlrichtung des Laserlichtstrahls 3 in das Dekormaterial 1 eingebrachte Schwächung ist dadurch in Bezug auf die durch die Mittellinien der sichtbaren Löcher 11 vorgegebene Mittelebene unsymmetrisch. Auf der linken Seite dieser Mittelebene ist dementsprechend die Schwächung geringer ausgebildet als auf der rechten. Das hat seinen Grund darin, dass die schräg verlaufenden Bohrungen sich mit zunehmender Tiefe aus dem linksseitigen Bereich entfernen. Das senkrecht zu Oberfläche des Dekormaterials 1 bestimmbare Schwächungstiefenprofil unterscheidet sich demnach links- und rechtsseitig der Schwächungslinie 4. Durch das unterschiedliche Schwächungstiefenprofil ergibt sich unter Zugbelastungen eine senkrecht zur Oberfläche des Dekormaterials 1 verlaufende Querspannungskomponente, die einer sichtbaren Deformation an der Oberfläche entgegen wirkt.

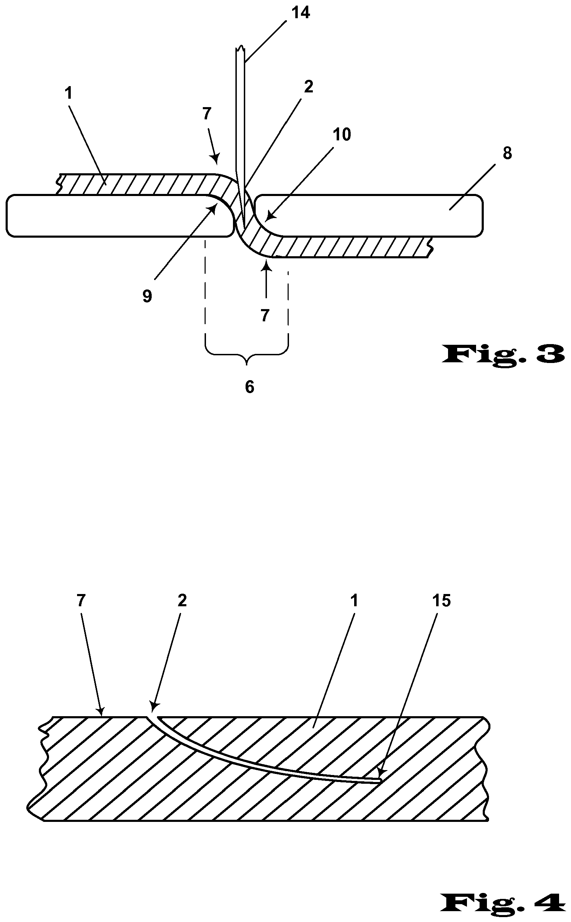

Alternativ zu der vorangehend beschriebenen bevorzugten Durchführungsform können die daran erläuterten erfindungsgemäßen Verfahren auch in einer Vorrichtung mit mechanischen Bearbeitungswerkzeugen umgesetzt werden. Dies zeigen schematisch die Fig. 3 und 4 für eine Bearbeitung mit einem Schneidrad 14. Das Dekormaterial ist in gleicher Weise vor vorangehend beschrieben in einer Haltevorrichtung 8 unter Ausbildung eines die Bearbeitungsbereich einschließenden Doppelfalzes 6 angeordnet. Von der nach oben weisenden Seite her wird mit einem Schneidrad 14 ein unvollständiger Schnitt erzeugt. Während der Bearbeitung bewegt sich das Schneidrad 14 entlang der Bearbeitungsrichtung in die Zeichenebene hinein. Durch den schlanken Winkel zwischen Schneidrad 14 und Mittelfaser des Dekormaterials ergibt sich ein bogenförmig in die Tiefe des Materials nach einer Seite der Schwächungslinie hinein laufender Schnitt 15. Dessen Kontur versinnbildlicht die vergrößerte Teilschnittansicht in Fig. 4. Der genaue Verlauf des Schnitts 15 ergibt sich durch die Faltung des Dekormaterials 1 in der Haltevorrichtung 8. In Abhängigkeit von dem Verlauf der Schwächungslinie sowie der Stärke und Flexibilität des Dekormaterials kann es empfehlenswert sein, das Dekormaterial in einem engen Spalt der Haltevorrichtung 8 zu fixieren, um eine gleichmäßige Kontur des Schnitts 15 sicherzustellen. In einer kontinuierlichen Verarbeitung sind gemäß der Erfindung die links und rechts dargestellten Teile der Haltevorrichtung 8 als Transportwalzen ausgebildet. Das Schneidrad 14 stünde in dieser Abwandlung in Bezug auf die Haltevorrichtung 8 fest. Der Schnitt 15 würde in Bearbeitungsrichtung nur durch den Vorschub des Dekormaterials 1 zwischen den Transportwalzen bewirkt.

## Patentansprüche

1. Verfahren zur Erzeugung einer linienförmigen Schwächung in einem flächigen Dekormaterial (1), insbesondere in einem Lederstück oder einer Kunststoffhaut, mit einem entlang einer Bearbeitungsrichtung (A) fortschreitenden punkt- oder fleckförmigen Einwirkungsbereich (2) eines Laserlichtstrahls (3) auf das Dekormaterial (1), worin das Dekormaterial (1) im Einwirkungsbereich (2) quer zur Bearbeitungsrichtung (A) angestellt wird, um links und rechts der durch die Bearbeitungsrichtung (A) vorgegebenen Schwächungslinie (4) ein unterschiedliches Schwächungstiefenprofil zu erhalten, **dadurch gekennzeichnet, dass** das Dekormaterial (1) links- und rechtsseitig neben der Schwächungslinie (4) derart an einer Haltevorrichtung (8) angeordnet ist, dass der Bearbeitungsbereich (2) zwischen einander gegenüberliegenden Stützkanten (9, 10) der Haltevorrichtung in einem parallelen Doppelfalz (6) liegt, und die Haltevorrichtung (8) paarweise sich gegenüberliegende Transportwalzen aufweist, zwischen denen das Dekormaterial entgegen der Bearbeitungsrichtung (A) vorgeschoben wird.

2. Verfahren nach Anspruch 1, worin der Doppelfalz (6) annähernd zueinander und zur Bearbeitungsrichtung (a) parallel verlaufende Falzlinien (7) aufweist.

3. Verfahren nach einem der vorangehenden Ansprüche, worin durch einen diskontinuierlich fortschreitenden Einwirkungsbereich (2) im Dekormaterial (1) eine Reihe nebeneinander liegender Löcher (11) gebildet wird.

4. Verfahren nach Anspruch 3, worin die im Dekormaterial (1) erzeugten Löcher (11) zur Rückseite offene, an die Sichtseite heranreichende Sacklöcher sind.

5. Verfahren nach Anspruch 4 oder 5, worin jedes Loch (11) durch die Einwirkung einer vorgegebenen Anzahl von Laserlichtpulsen mit jeweils vorgegebener Energie erzeugt wird.

6. Verfahren nach einem der Ansprüche 4 bis 5, worin innerhalb der entlang der Bearbeitungsrichtung gebildeten Lochreihe (12) wiederkehrend und insbesondere regelmäßig sog. Referenzlöcher (13) erzeugt werden, für die die Anzahl und/oder die Energie der einwirkenden Laserpulse auf ein vorgegebenes Bearbeitungsergebnis geregelt wird.

7. Verfahren nach Anspruch 6, worin das Bearbeitungsergebnis als Bearbeitungstiefe oder Restwandstärke vorgegeben wird.

8. Verfahren zur Erzeugung einer linienförmigen Schwächung in einem flächigen Dekormaterial (1), insbesondere in einem Lederstück oder einer Kunststoffhaut, mit einem entlang einer Bearbeitungsrichtung (A) fortschreitenden Schnitt (3) eines Schneidwerkzeugs, insbesondere eines Schneidmessers oder Schneidrads (14), worin das Dekormaterial (1) im Schnittbereich (2) quer zur Bearbeitungsrichtung (A) angestellt wird, um links und rechts der durch die Bearbeitungsrichtung (a) vorgegebenen Schwächungslinie (4) ein unterschiedliches Schwächungstiefenprofil zu erhalten, **dadurch gekennzeichnet, dass** das Dekormaterial (1) links- und rechtsseitig neben der Schwächungslinie (4) derart an einer Haltevorrichtung (8) angeordnet ist, dass der Bearbeitungsbereich (2) zwischen einander gegenüberliegenden Stützkanten (9, 10) der Haltevorrichtung in einem parallelen Doppelfalz (6) liegt, und die Haltevorrichtung (8) paarweise sich gegenüberliegende Transportwalzen aufweist, zwischen denen das Dekormaterial entgegen der Bearbeitungsrichtung (A) vorgeschoben wird.

9. Verfahren nach Anspruch 8, worin der Doppelfalz (6) annähernd zueinander und zur Bearbeitungsrichtung (A) parallel verlaufende Falzlinien (7) aufweist.

## Claims

1. Method for producing a linear weakness in a planar decorative material (1), in particular in a piece of leather or plastic skin, comprising a punctiform or patchy region of action (2) of a laser light beam (3) onto the decorative material (1), said region of action progressing along a processing direction (A), wherein the decorative material (1) is placed in the region of action (2) transversely with respect to the processing direction (A) in order to maintain a different weakening depth profile to the left and the right of the weakening line (4) predefined by the processing direction (A), **characterised in that** the decorative material (1) on the left side and right side next to the weakening line (4) is arranged such on a holding device (8) that the processing region (2) lies between support edges (9, 10) of the holding device in a parallel double fold (6), said support edges being opposite each other, and the holding device (8) has transport rollers opposite each other in pairs, between which the decorative material is fed counter to the processing direction (A).

2. Method according to claim 1, wherein the double fold (6) has fold lines (7) running parallel approximately with respect to each other and with respect to the processing direction (A).

3. Method according one of the preceding claims, wherein a row of adjacent holes (11) is formed in the decorative material (1) through a discontinuously progressive region of action (2).

4. Method according to claim 3, wherein the holes (11) produced in the decorative material (1) are blind holes that are open towards the back side and extend to the visible side.

5. Method according to claim 4 or 5, wherein each hole (11) is produced by the action of a predetermined number of laser light pulses with predetermined energy.

6. Method according to one of the claims 4 to 5, wherein within the row of holes (12) formed along the processing direction so-called reference holes (13) are produced in a recurring and particularly regular manner, for which the number and/or the energy of the acting laser pulse is controlled to a predetermined processing result.

7. Method according to claim 6, wherein the processing result is predetermined as a processing depth or residual wall thickness.

8. Method for producing a linear weakness in a planar decorative material (1), in particular in a piece of leather or plastic skin, comprising a cut (3) of a cutting tool, in particular of a cutting knife or cutting wheel (14), said cut progressing along a processing direction (A), wherein the decorative material (1) is placed in the cut region (2) transversely with respect to the processing direction (A) in order to maintain a different weakening depth profile to the left and the right of the weakening line (4) predefined by the processing direction (A), **characterised in that** the decorative material (1) on the left side and right side next to the weakening line (4) is arranged such on a holding device (8) that the processing region (2) lies between support edges (9, 10) of the holding device in a parallel double fold (6), said support edges being opposite each other, and the holding device (8) has transport rollers opposite each other in pairs, between which the decorative material is fed counter to the processing direction (A).

9. Method according to claim 8, wherein the double fold (6) has fold lines (7) which run parallel approximately with respect to each other and with respect to the processing direction (A).

## Revendications

1. Procédé de création d'un affaiblissement en forme de ligne dans un matériau décoratif plat (1), notamment dans une pièce de cuir ou une peau en matière plastique, avec une zone d'exposition (2) en forme de taches ou de points s'étendant le long d'une direction de traitement (A) d'un rayon de lumière laser (3) sur le matériau décoratif (1), dans lequel le matériau décoratif (1) est disposé dans la zone d'exposition (2) de façon transversale par rapport à la direction de traitement (A), afin d'obtenir à gauche et à droite de la ligne d'affaiblissement (4) définie par la direction de traitement (A) un profil de profondeur d'affaiblissement différent, **caractérisé en ce que** le matériau de décoratif (1) est disposé du côté gauche et du côté droit à côté de la ligne d'affaiblissement (4) sur un appareil de support (8) de sorte que la zone de traitement (2) repose entre des arêtes d'appui (9, 10) opposées l'une à l'autre de l'appareil de support selon un double pli parallèle (6) et l'appareil de support (8) présente des rouleaux transporteurs opposés par paire, entre lesquels le matériau décoratif est avancé dans la direction opposée à la direction de traitement (A).

2. Procédé selon la revendication 1, dans lequel le double pli (6) présente des lignes de pli (7) s'étendant approximativement parallèles les unes aux autres et à la direction de traitement (a).

3. Procédé selon une des revendications précédentes, dans lequel une série de trous (11) disposés les uns à côté des autres est formée à travers une zone d'exposition (2) s'étendant de façon discontinue dans le matériau décoratif (1).

4. Procédé selon la revendication 3, dans lequel les trous (11) produits dans le matériau décoratif (1) sont des trous borgnes ouverts sur le côté arrière s'étendant jusqu'au côté visible.

5. Procédé selon la revendication 4 ou 5, dans lequel chaque trou (11) est produit par l'exposition à un nombre prédéfini d'impulsions de lumière laser avec une énergie prédéfinie respective.

6. Procédé selon une des revendications 4 à 5, dans lequel, au sein de la série de trous (12) formée le long de la direction de traitement, sont produits des trous dits de référence (13) récurrents et notamment réguliers, pour lesquels le nombre et/ou l'énergie des impulsions laser irradiées sont réglés à partir d'un résultat de traitement prédéfini.

7. Procédé selon la revendication 6, dans lequel le résultat de traitement est prédéfini sous la forme de profondeur de traitement ou de résistance de paroi restante.

8. Procédé de création d'un affaiblissement en forme de ligne dans un matériau décoratif plat (1), notamment dans une pièce de cuir ou une peau en matière plastique, avec une section (3) d'un outil de coupe s'étendant le long d'une direction de traitement (A), notamment un couteau de découpe ou une roue de coupe (14), dans lequel le matériau décoratif (1) est disposé dans la zone partielle (2) de façon transversale par rapport à la direction de traitement (A), afin d'obtenir à gauche et à droite de la ligne d'affaiblissement (4) définie par la direction de traitement (a) un profil de profondeur d'affaiblissement différent, **caractérisé en ce que** le matériau de décoratif (1) est disposé du côté gauche et du côté droit à côté de la ligne d'affaiblissement (4) sur un appareil de support (8) de sorte que la zone de traitement (2) repose entre des arêtes d'appui (9, 10) opposées l'une à l'autre de l'appareil de support selon un double pli parallèle (6) et l'appareil de support (8) présente des rouleaux transporteurs opposés par paire, entre lesquels le matériau décoratif est avancé dans la direction opposée à la direction de traitement (A).

9. Procédé selon la revendication 8, dans lequel le double pli (6) présente des lignes de pli (7) s'étendant approximativement parallèles les unes aux autres et à la direction de traitement (A).
